(19) Europäisches Patentamt
European Patent Office
Office européen des brevets

(11) **EP 3 778 999 A1**

(12) **EUROPEAN PATENT APPLICATION**
published in accordance with Art. 153(4) EPC

(43) Date of publication:
**17.02.2021 Bulletin 2021/07**

(51) Int Cl.:
**D01F 6/18** (2006.01)     **D01D 5/06** (2006.01)
**D01F 9/22** (2006.01)

(21) Application number: **19774986.4**

(22) Date of filing: **12.03.2019**

(86) International application number:
**PCT/JP2019/009888**

(87) International publication number:
**WO 2019/188236 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2018 JP 2018059237**

(71) Applicant: **Toray Industries, Inc.**
**Tokyo, 103-8666 (JP)**

(72) Inventors:
• **TAKECHI, Yusuke**
  **Iyo-gun, Ehime 791-3193 (JP)**
• **NAKAYAMA, Isao**
  **Iyo-gun, Ehime 791-3193 (JP)**
• **OHASHI, Takeya**
  **Iyo-gun, Ehime 791-3193 (JP)**

(74) Representative: **Mewburn Ellis LLP**
**Aurora Building**
**Counterslip**
**Bristol BS1 6BX (GB)**

(54) **METHOD FOR MANUFACTURING ACRYLONITRILIC FIBER BUNDLE AND METHOD FOR MANUFACTURING CARBON FIBER BUNDLE**

(57) The present invention has an object of providing a drawing method that has excellent process passability when the acrylonitrile fiber bundle is subjected to pressurized steam drawing particularly at high drawing ratio or at high speed. The present invention is a method for manufacturing an acrylonitrile fiber bundle, the method including the step of: drawing a fiber bundle with pressurized steam under a pressurized steam atmosphere using a pressurized steam drawing device A, the fiber bundle including a yarn spun from a spinning solution containing an acrylonitrile copolymer, the pressurized steam drawing device A having at least two zones of a preheating zone (1) provided on a fiber bundle introduction side and a heating/drawing zone (2) provided on a fiber bundle extraction side, and a sealing zone (3B) having a sealing member and separating the two zones, a pressure P1 (MPa), a pressure P2 (MPa), a difference between P2 and P1, that is, $\Delta P = P2 - P1$, and a residence time t (sec) satisfying a relationship $1.0 \le \Delta P/t \le 10$, wherein the pressure P1 is a pressure in the preheating zone (1), the pressure P2 is a pressure in the heating/drawing zone (2), and the residence time t is a residence time of the fiber bundle in the sealing zone (3B), a minimum load temperature T1 (°C) of the fiber bundle (7) before being introduced into the pressurized steam drawing device (1) and a temperature T2 (°C) in the preheating zone (1) satisfying a relationship $T1 - 20 \le T2 < T1$.

FIG 1

EP 3 778 999 A1

## Description

TECHNICAL FIELD

The present invention relates to a method for manufacturing an acrylonitrile fiber bundle.

BACKGROUND ART

In the manufacture of an acrylonitrile fiber bundle used as a precursor fiber of a carbon fiber bundle, it has been conventionally known to draw the acrylonitrile fiber bundle by pressurized steam. This is because hot water under atmospheric pressure provides a high temperature, and presence of water causes an effect of plasticizing the acrylonitrile fiber bundle, and enables the acrylonitrile fiber bundle to be drawn at high drawing ratio. However, in drawing the acrylonitrile fiber bundle with pressurized steam at high drawing ratio, defects such as breakage of monofilament, generation of fuzz, and breakage of entire fiber bundle may occur. The same applies when obtaining a low denier fiber bundle or when trying to treat a fiber bundle at higher speed.

Patent Document 1 discloses a technique in which by improving a sealing property between a steam box and a steam drawing machine, only steam from the steam drawing machine is supplied to the steam box, and additionally, the flow of the steam can be stabilized in the opposite direction of yarn entry since the steam is supplied from one direction. As a result, damage to the fiber bundle is reduced and the quality is improved.

In addition, Patent Document 2 discloses a technique in which, in a drawing method including dividing a drawing step into a preheating zone and a heating/drawing zone, and supplying pressurized steam of different pressures to the zones, in order to prevent a drawing point from shifting to the preheating zone and being forcedly drawn at a low temperature, wet steam is blown into the heating/drawing zone, wherein the wet steam has higher wetness than wetness of steam blown into the preheating zone.

Patent Document 3 discloses a technique in which the pressure of pressurized steam used for preheating and the residence time in the preheating, and the pressure of pressurized steam used for drawing and the residence time in the drawing are each controlled within a certain condition range. This technique is suitable for stably manufacturing a high-quality carbon fiber bundle and suppresses the fluctuation rate of denier.

In addition, Patent Document 4 discloses a technique in which in order to control the temperature of a steam chamber to which pressurized steam is supplied, a seal chamber on an inlet side of a steam drawing device, and outside an inlet of the steam drawing device, while the temperature and the pressure of the steam are being detected, water corresponding to the temperature is supplied to the pressurized steam that is supplied to the steam chamber with an atomizer, and the temperature difference between the temperature of the steam and the temperature of saturated steam is controlled to 2°C or less.

PRIOR ART DOCUMENTS

PATENT DOCUMENTS

Patent Document 1: Japanese Patent Laid-open Publication No. 2013-159874
Patent Document 2: Japanese Patent Laid-open Publication No. H05-263313
Patent Document 3: Japanese Patent Laid-open Publication No. 2008-214795
Patent Document 4: Japanese Patent Laid-open Publication No. 2015-30923

SUMMARY OF THE INVENTION

PROBLEM TO BE SOLVED BY THE INVENTION

However, in the method of Patent Document 1, when it is attempted to treat the acrylonitrile fiber bundle by drawing at higher speed or at higher drawing ratio, a part of the acrylonitrile fiber bundle is introduced into the steam drawing machine without being subjected to a sufficient plasticizing effect in the steam box and the drawing may occur in an unintended zone. This may lead to variations in quality and breakage of the fiber bundle.

In the method of Patent Document 2, wet steam having high wetness is blown into the heating/drawing zone, so that drain (drips of water) generate when the wet steam is supplied and collides with a wall surface of the steam drawing device. The drain attach to a fiber bundle, and the fiber bundle comes to have a part with drain and a part without drain are generated. Further, an effect of plasticizing the fiber bundle cannot be efficiently obtained in the part without drain. This may lead to breakage of a single yarn or breakage of an acrylonitrile fiber bundle.

In the method of Patent Document 3, it is essential to increase the production speed in order to enhance production capacity without large capital investment, and the residence time in the preheating zone and the heating zone is shortened, so that it is impossible to obtain an amount of heat required for preheating and drawing. This may lead to breakage of a single yarn or breakage of an acrylonitrile fiber bundle.

In the method of Patent Document 4, as to the steam supplied from the steam chamber to the inlet of the steam drawing device, excess water needs to be supplied to the pressurized steam supplied to the steam chamber in order to control the temperature difference between the temperature of the seal chamber on the inlet side of the steam drawing device and outside the inlet of the steam drawing device and the temperature of saturated steam to 2°C or less. If the atomizer reduces the spray diameter of water and steam and water are evenly mixed, water droplets with a large spray diameter are formed in the process of supplying steam. The large water droplets collide with an acrylonitrile fiber bundle to lead to breakage of a single yarn or breakage of the acrylonitrile fiber bundle.

An object of the present invention is to remedy the drawbacks of the conventional techniques and to provide a drawing method having excellent process passability when the acrylonitrile fiber bundle used as the precursor fiber of the carbon fiber bundle is subjected to pressurized steam drawing, particularly when the acrylonitrile fiber bundle is treated by the pressurized steam drawing at high drawing ratio or at high speed, or when a low denier acrylonitrile fiber bundle is to be obtained.

SOLUTION TO PROBLEM

In order to solve the above-mentioned problem, the present inventors have made extensive studies, and as a result, achieved the present invention by finding that the following method enables a more uniform drawing treatment to obtain an acrylonitrile fiber bundle that has excellent process passability. The method is for drawing an acrylonitrile fiber bundle, the method including the step of: drawing a fiber bundle using a pressurized steam drawing device, the pressurized steam drawing device having two zones of a preheating zone provided on a fiber bundle introduction side and a heating/drawing zone provided on an acrylonitrile fiber bundle extraction side, and a sealing zone having a sealing member and separating the two zones. In the method, the pressure difference between the preheating zone and the heating/drawing zone as well as the residence time of the fiber bundle to reside in the sealing zone between the preheating zone and the heating/drawing zone are controlled.

That is, the method for manufacturing an acrylonitrile fiber bundle of the present invention is a method including the step of: drawing a fiber bundle with pressurized steam under a pressurized steam atmosphere using a pressurized steam drawing device, the fiber bundle including a yarn spun from a spinning solution containing an acrylonitrile copolymer, the pressurized steam drawing device having at least two zones of a preheating zone provided on a fiber bundle introduction side and a heating/drawing zone provided on a fiber bundle extraction side, and a sealing zone having a sealing member and separating the two zones, a pressure P1 (MPa), a pressure P2 (MPa), a difference between P2 and P1, that is, $\Delta P = P2 - P1$, and a residence time t (sec) satisfying a relationship $1.0 \leq \Delta P/t \leq 10$, wherein the pressure P1 is a pressure in the preheating zone, the pressure P2 is a pressure in the heating/drawing zone, and the residence time t is a residence time of the fiber bundle in the sealing zone, a minimum load temperature T1 (°C) of the fiber bundle before being introduced into the pressurized steam drawing device and a temperature T2 (°C) in the preheating zone satisfying a relationship $T1 - 20 \leq T2 < T1$.

The method for manufacturing a carbon fiber bundle of the present invention is a method including the steps of: manufacturing an acrylonitrile fiber bundle by the above-mentioned method for manufacturing an acrylonitrile fiber bundle, thereafter oxidizing the acrylonitrile fiber bundle in an oxidative atmosphere at 200 to 300°C, and then heating the acrylonitrile fiber bundle in an inert atmosphere at 1000°C or higher.

EFFECTS OF THE INVENTION

According to the present invention, the pressurized steam drawing of an acrylonitrile fiber bundle can be performed while suppressing problems such as breakage of the entire fiber bundle. Further, it is possible to prevent breakage of monofilament and generation of fuzz, and to stably provide a high-quality acrylonitrile fiber bundle.

BRIEF DESCRIPTION OF THE DRAWING

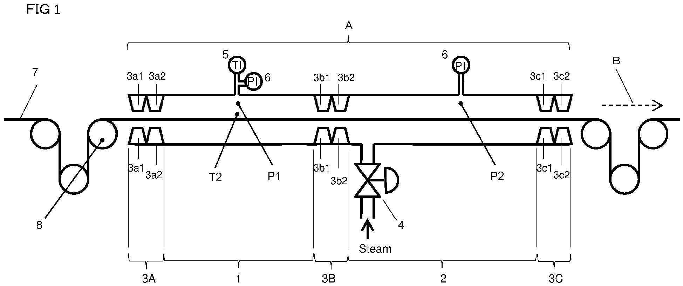

Fig. 1 is a schematic side view showing an example of a device that performs the pressurized steam drawing treatment according to the present invention.

## EMBODIMENT OF THE INVENTION

Hereinafter, the present invention is described in detail with reference to Fig. 1.

In the method for manufacturing an acrylonitrile fiber bundle of the present invention, a spinning solution containing an acrylonitrile copolymer is spun to produce a spun yarn, and then a fiber bundle including the spun yarn is subjected to pressurized steam drawing using a pressurized steam drawing device. Here, before or after pressurized steam drawing using the pressurized steam drawing device, a step known in the field of the fiber manufacture can be appropriately performed. For example, in the case of spinning from a solution state of an acrylonitrile fiber bundle, a solution obtained by dissolving the acrylonitrile copolymer containing a homopolymer or a comonomer of acrylonitrile as a raw material polymer in a known organic or inorganic solvent is spun, and then an acrylonitrile fiber bundle of the obtained spun yarn is drawn. During drawing the acrylonitrile fiber bundle, the pressurized steam drawing according to the present invention can be performed. In this case, the spinning method may be any of the so-called wet spinning, dry-wet spinning, and dry spinning, and desolvating, drawing in a bath, treatment to attach oil, drying and the like can be performed in the subsequent steps. The pressurized steam drawing may be performed at any stage in the fiber manufacture process. However, the pressurized steam drawing is preferably performed after removing the solvent in the fiber bundle to some extent, that is, after washing or after drawing in the bath, or after drying. From the viewpoint of obtaining a highly oriented fiber bundle, the pressurized steam drawing is preferably performed after drying.

Hereinafter, the present invention is described by way of examples with reference to the drawing. However, the present invention should not be interpreted as being limited to the examples. A pressurized steam drawing device A used in the present invention has at least two zones including a preheating zone 1 provided on a fiber bundle introduction side and a heating/drawing zone 2 provided on an acrylonitrile fiber bundle extraction side when performing pressurized steam drawing on the fiber bundle. Here, the preheating zone is a zone in which the fiber bundle is preheated in advance in order to be drawn more uniformly in the subsequent heating/drawing zone, and the heating/drawing zone is a zone in which the fiber bundle is heated and drawn. In the present invention, the pressurized steam drawing device in which the two zones are separated by a sealing zone 3B having sealing members (3b1 and 3b2) is used, and it is important that a relationship between the pressure difference P2 - P1, that is, $\Delta P$ and a residence time t (sec) in the sealing zone 3B between the preheating zone and the heating/drawing zone is $1.0 \leq \Delta P/t \leq 10$, wherein the pressure P1 (MPa) is a pressure in the preheating zone, the pressure P2 (MPa) is a pressure in the heating/drawing zone, and the residence time t is a residence time of the fiber bundle in the sealing zone 3B. When the value $\Delta P/t$ is within the above-mentioned range, the pressure gradient between the preheating zone 1 and the heating/drawing zone 2 is steep, so that the entire fiber bundle is uniformly drawn at once in the heating/drawing zone. As a result, uneven drawing between single yarns is suppressed, and problems such as breakage of the fiber bundle and breakage of a single yarn can be prevented. Furthermore, it is preferable to use a smaller pressurized steam drawing device to increase the productivity, and it is preferable that a relationship $2 \leq \Delta P/t \leq 5$ is satisfied to draw the fiber bundle more uniformly.

The pressure P1 in the preheating zone 1 is preferably 0.05 MPa or more and less than 0.35 MPa, and the pressure P2 in the subsequent heating/drawing zone 2 is preferably 0.35 MPa or more and 0.7 MPa or less to perform preheating and heating/drawing effectively. Here, the pressure in the preheating zone and the heating/drawing zone may be measured by a general device, and can be measured, for example, by a Bourdon tube gage. When the pressure P1 in the preheating zone is 0.05 MPa or more and less than 0.35 MPa, uniform preheating can be performed on the entire fiber bundle in the preheating zone, and uniform drawing can be performed in the subsequent heating/drawing zone. Therefore, it may be possible to prevent generation of fuzz in the acrylonitrile fiber bundle. Furthermore, when the pressure P2 in the heating/drawing zone is 0.35 MPa or more and 0.7 MPa or less, a sufficient heat quantity required for drawing the fiber bundle can be obtained and the fiber bundle can be drawn uniformly. Therefore, it may be possible to prevent generation of fuzz in the acrylonitrile fiber bundle.

A plurality of both the preheating zones and the heating/drawing zones can be provided. In that case, the pressure P1 (MPa) in the preheating zone refers to the pressure in the preheating zone that is the closest to the heating/drawing zone, and the pressure P2 (MPa) in the heating/drawing zone refers to the pressure in the heating/drawing zone that is the closest to the preheating zone.

As the sealing member provided in the sealing zone, a so-called labyrinth nozzle that has a plurality of plate pieces extending vertically from an upper surface and a bottom surface of an inner wall of the pressurized steam drawing device in the direction of approaching each other across the running yarns can be used. In addition, a plurality of small-diameter pipes can be used in series. However, it is not particularly limited as long as the pressure difference between the preheating zone and the heating/drawing zone can be created or maintained. The labyrinth nozzle can also be applied to any shape such as a round shape, a rectangular shape, and an elliptical shape, and may be of an integrated type or a split type. Additionally, the labyrinth nozzle is not restricted as to the inner diameter, the number of steps, or the shape of a throttle side. Further, a material having mechanical strength sufficient for sealing to prevent steam leakage is preferably applied to the labyrinth nozzle. For example, as a material for the part that may come into contact with the fiber bundle in a treatment device, particularly, it is preferable to use a material made of stainless steel or chromium-plated steel material since the material has corrosion resistance and suppresses damage to the fiber bundle when the fiber bundle comes into contact with the part, but the material is not limited to these.

As a method of adjusting the pressures in the preheating zone 1 and the heating/drawing zone 2, a method of adjusting the pressure of the steam supplied to the pressurized steam drawing device, or a method of changing the number and shape of the sealing members in a sealing zone 3A outside the preheating zone or a sealing zone 3C outside the heating/drawing zone can be applied. For example, when the pressure loss in the sealing zone is reduced by reducing the number of the sealing members or changing the shape of the sealing members in the sealing zone 3A outside the preheating zone or the sealing zone 3C outside the heating/drawing zone, the pressure in the preheating zone or the heating/drawing zone can be reduced. On the other hand, when the pressure loss in the sealing zone is increased by increasing the number of sealing members or changing the shape of the sealing members in the sealing zone 3A outside the preheating zone or the sealing zone 3C outside the heating/drawing zone, the pressure in the preheating zone or the heating/drawing zone can be increased. Further, the pressure difference between the preheating zone and the heating/drawing zone can be adjusted by changing the number of and the shape of the sealing members in the sealing zone 3B between the preheating zone and the heating/drawing zone. For example, when the pressure loss in the sealing zone is reduced by reducing the number or changing the shape of sealing members in the sealing zone 3B, the pressure difference between the preheating zone and the heating/drawing zone can be reduced. On the other hand, when the pressure loss in the sealing zone is increased by increasing the number or changing the shape of sealing members in the sealing zone 3B, the pressure difference between the preheating zone and the heating/drawing zone can be increased. The residence time t in the sealing zone 3B between the preheating zone and the heating/drawing zone can be changed by the speed at which the fiber bundle is supplied to the pressurized steam drawing device. As a method for adjusting the residence time t, a method for adjusting the length of the sealing zone 3B by increasing or decreasing the number or changing the length of sealing members (3b1 and 3b2) in the sealing zone 3B between the preheating zone and the heating/drawing zone can be applied.

In the present invention, it is important that a minimum load temperature T1 (°C) of the fiber bundle before being introduced into the pressurized steam drawing device and a temperature T2 (°C) in the preheating zone satisfy a relationship T1 - 20 ≤ T2 < T1.

Here, the minimum load temperature T1 (°C) is obtained by the following method. The fiber bundle before being introduced into the pressurized steam drawing device is sampled, and one monofilament is taken from the fiber bundle. The monofilament is set on a tensile probe (the sample has a length of 10 mm) TMA4010SA manufactured by Bruker AXS GmbH, and in order to eliminate the slack of the sample, a tensile load of 0.3 g is applied to the sample, and the load mode is set to be constant length. The load is measured at every 0.5 seconds while increasing the temperature from room temperature to 200°C in the air at a temperature rising rate of 20°C/min. The temperature at which the load has the minimum value in the range of 50°C to 200°C is defined as the minimum load temperature T1. The temperature T2 (°C) in the preheating zone may be measured with a general device, and can be measured, for example, with a thermocouple.

When a plurality of preheating zones is provided, the temperature T2 (°C) in the preheating zone refers to the temperature in the preheating zone that is the closest to the heating/drawing zone.

When the relationship T1 - 20 ≤ T2 < T1 is satisfied, it is possible to prevent unintended drawing from partially starting in the preheating zone, and as a result, it is possible to prevent deterioration of the quality due to fuzz. It is preferable to satisfy a relationship T1 - 15 ≤ T2 ≤ T1 - 5 to perform sufficient and stable preheating in the preheating zone.

The minimum load temperature T1 of the fiber bundle before being introduced into the pressurized steam drawing device can be changed by changing the content or composition of a copolymerization component contained in the acrylonitrile polymer, or by changing drawing conditions or drying conditions in spinning, but the method of changing the temperature T1 is not particularly limited to these. The temperature T2 in the preheating zone can be adjusted by the pressure of the pressurized steam supplied to the pressurized steam drawing device, or by the sealing member at both ends of the preheating zone, that is, the number and the shape of the sealing members. Furthermore, the temperature T2 in the preheating zone can be adjusted by cooling the preheating zone with water or the like or by heating the preheating zone with an electric heater or the like from outside of the device.

Further, the method for manufacturing an acrylonitrile fiber bundle of the present invention can be particularly preferably used when a single yarn of the fiber bundle before being introduced into the pressurized steam drawing device has a roundness of 0.9 or more. Here, the roundness of the single yarn is obtained by the following method. The fiber bundle before being introduced into the pressurized steam drawing device is sampled, and cut perpendicular to the fiber axis with a razor, and the cross-sectional shape of a monofilament is observed using an optical microscope. The measurement magnification shall be such that the thinnest monofilament is displayed as about 1 mm, and the number of pixels of equipment used shall be 2 million pixels. By analyzing the obtained image, the cross-sectional area and the perimeter of the single yarns that form the fiber bundle are obtained, and the diameter (fiber diameter) of the cross section of the single yarn assuming that the cross section is a perfect circle is calculated and obtained in a unit of 0.1 μm from the cross-sectional area. Then, the roundness of the single yarn forming the fiber bundle can be obtained by using the formula of roundness = $4\pi S/L^2$ (wherein S represents the cross-sectional area of the single yarn, and L represents the perimeter of the single yarn). When the roundness of the single yarn is 0.9 or more, the fiber bundle is formed in a dense state, and it becomes possible to perform a more uniform drawing treatment in the pressurized steam drawing device, so that the effect of the present invention is easy to appear. The roundness of the single yarn of the fiber bundle can be adjusted by changing spinning coagulation conditions and drawing conditions.

Next, a method for manufacturing a carbon fiber bundle from the acrylonitrile fiber bundle obtained by the method for manufacturing an acrylonitrile fiber bundle of the present invention is described.

The acrylonitrile fiber bundle manufactured by the above-mentioned method for manufacturing an acrylonitrile fiber bundle is oxidized in an oxidative atmosphere such as the air at 200 to 300°C. It is preferable that the temperature of the oxidizing treatment is raised in multiple stages from low temperature to high temperature in order to obtain a oxidized fiber bundle, and It is preferable to draw the fiber bundle at a high draw ratio within a range in which fuzz is not generated, in order to sufficiently express the performance of the carbon fiber bundle. Then, the obtained oxidized fiber bundle is heated to 1000°C or higher in an inert atmosphere such as nitrogen to manufacture the carbon fiber bundle. Then, a functional group can be added to the surface of the carbon fiber bundle to enhance adhesiveness with a resin by performing anodization in an electrolyte aqueous solution. Further, it is preferable to add a sizing agent such as an epoxy resin to obtain a carbon fiber bundle having excellent scratch resistance.

EXAMPLES

Hereinafter, the present invention is described more specifically with reference to examples.

($\Delta$P Measurement)

The pressure at the central portion in the traveling direction of the fiber bundle in each of the preheating zone and the heating/drawing zone was measured with a Bourdon tube gage.

$\Delta$P (MPa) was calculated from the measured pressure P1 (MPa) in the preheating zone and the pressure P2 (MPa) in the heating/drawing zone by the following formula.

$$\Delta P = P2 - P1$$

(Residence time t (sec) in sealing zone between preheating zone and heating/drawing zone of pressurized steam drawing device)

The speed of a feed roll that supplies the fiber bundle to the pressurized steam drawing device was measured with a surface speedometer, and the residence time t was calculated by the following formula.

```
(Length (m) of sealing member between preheating zone
and heating/drawing zone)/(speed of feed roll (m/sec)) =
(residence time t (sec) in sealing zone between preheating
zone and heating/drawing zone).
```

(T2: Temperature in preheating zone)

In the preheating zone, at a central portion in the traveling direction of the fiber bundle, a vertical position and a position 1 mm away from the traveling fiber bundle were measured with a thermocouple to obtain the temperature T2 in the preheating zone. The measurement was carried out by using a drawing device equipped with a sight glass while confirming that the thermocouple and the traveling fiber bundle were not in contact with each other.

(T1: Minimum load temperature)

The fiber bundle before being introduced into the pressurized steam drawing device was sampled, and one monofilament was taken from the fiber bundle. The monofilament was set on a tensile probe (the sample had a length of 10 mm) TMA4010SA manufactured by Bruker AXS GmbH, and in order to eliminate the slack of the sample, a tensile load of 0.3 g was applied to the sample, and the load mode was set to be constant length. The load was measured at every 0.5 seconds while increasing the temperature from room temperature to 200°C in the air at a temperature rising rate of 20°C/min. The temperature at which the load had the minimum value in the range of 50°C to 200°C was read. The measurement was repeated 10 times, and the average value was defined as T1.

(Number of labyrinths)

The number of the sealing members (labyrinth nozzles) in the sealing zone between the preheating zone and the heating/drawing zone of the pressurized steam drawing device was counted.

(Roundness)

The fiber bundle before being introduced into the pressurized steam drawing device was sampled at a position 10 cm away from the pressurized steam drawing device, and cut perpendicular to the fiber axis with a razor, and the cross-sectional shape of a monofilament was observed using an optical microscope. The measurement magnification was such that the thinnest monofilament was displayed as about 1 mm, and the number of pixels of equipment used was 2 million pixels. By analyzing the obtained image, the cross-sectional area and the perimeter of the single yarns that form the fiber bundle were obtained, and the diameter (fiber diameter) of the cross section of the single yarn assuming that the cross section was a perfect circle was calculated and obtained in a unit of 0.1 $\mu$m from the cross-sectional area. Then, the roundness of the single yarn forming the fiber bundle was obtained by using the following formula. The roundness was defined as the average value of 10 randomly selected single yarns.

$$Roundness = 4\pi S/L^2$$

(wherein S represents the cross-sectional area of the single yarn, and L represents the perimeter of the single yarn)

(Quality of acrylonitrile fiber bundle)

After performing pressurized steam drawing with a pressurized steam drawing device, the number of fuzz balls having a size of 0.3 mm or more of the acrylonitrile fiber bundle per 1000 m before winding the acrylonitrile fiber bundle was counted, and the quality was evaluated. The evaluation criteria are as follows.

    1: $0 \leq$ number of fuzz $\leq 1$
    2: $1 <$ number of fuzz $\leq 2$
    3: $2 <$ number of fuzz $\leq 5$
    4: $5 <$ number of fuzz $< 60$
    5: number of fuzz $\geq 60$

(Process passability of acrylonitrile fiber bundle)

The process passability was evaluated from the number of yarn breakages per a production volume of 10 t of the acrylonitrile fiber bundle. The evaluation criteria are as follows.

    1: $0 \leq$ number of yarn breakages $\leq 1$
    2: $1 <$ number of yarn breakages $\leq 2$
    3: $2 <$ number of yarn breakages $\leq 3$
    4: $3 <$ number of yarn breakages $< 5$
    5: number of yarn breakages $\geq 5$

[Example 1]

A dimethyl sulfoxide solution of an acrylonitrile copolymer containing 99 mol% acrylonitrile and 1 mol% itaconic acid was dry-wet spun using a 4000-hole spinneret, and immediately three yarns were combined to form 12000 filaments. The filaments were drawn at a drawing ratio of 2 in warm water of 40°C and washed with water, further drawn at a drawing ratio of 2 in warm water of 70°C, and then dried to obtain a fiber bundle including 12000 filaments and having a total denier of 66000 dtex. The fiber bundle was introduced into the pressurized steam drawing device A (provided with 30 labyrinth nozzles in the sealing zone 3B) shown in Fig. 1 and drawn under the conditions shown in Table 1 to obtain an acrylonitrile fiber bundle including 12000 filaments and having a monofilament denier of 1.1 dtex. The roundness of the monofilament was evaluated by sampling the fiber bundle before being introduced into the pressurized steam drawing device. Table 1 shows the results of evaluating the quality and process passability for the obtained acrylonitrile fiber bundle, and the results of measuring the temperature in the pressurized steam drawing device.

[Examples 2, 4, and 5]

An acrylonitrile fiber bundle was obtained in the same manner as in Example 1 except that ΔP/t was changed by changing the number of sealing members in the sealing zone between the preheating zone and the heating/drawing zone of the pressurized steam drawing device to change the residence time t in the sealing zone, and by changing the shape of the sealing members to change the pressure difference ΔP as shown in Table 1. Table 1 shows the results of evaluating the quality and process passability for the obtained acrylonitrile fiber bundle, and the results of measuring the temperature in the pressurized steam drawing device.

[Example 3]

An acrylonitrile fiber bundle was obtained in the same manner as in Example 1 except that spinning coagulation conditions were changed to change the roundness of the acrylonitrile fiber bundle before being introduced into the pressurized steam drawing device as shown in Table 1. Table 1 shows the results of evaluating the quality and process passability for the obtained acrylonitrile fiber bundle, and the results of measuring the temperature in the pressurized steam drawing device.

[Example 6]

An acrylonitrile fiber bundle was obtained in the same manner as in Example 1 except that a dimethyl sulfoxide solution of an acrylonitrile copolymer containing 98.5 mol% acrylonitrile, 1 mol% itaconic acid, and 0.5 mol% methyl acrylate was used for spinning to change the minimum load temperature. Table 1 shows the results of evaluating the quality and process passability for the obtained acrylonitrile fiber bundle, and the results of measuring the temperature in the pressurized steam drawing device.

[Example 7]

An acrylonitrile fiber bundle was obtained in the same manner as in Example 1 except that the number and the shape of sealing members in the sealing zone between the preheating zone and the heating/drawing zone of the pressurized steam drawing device were changed and the shape of the sealing member in the sealing zone 3A outside the preheating zone was changed to change the temperature in the preheating zone as shown in Table 1. Table 1 shows the results of evaluating the quality and process passability for the obtained acrylonitrile fiber bundle, and the results of measuring the temperature in the pressurized steam drawing device.

[Comparative Examples 1 and 2]

An acrylonitrile fiber bundle was obtained in the same manner as in Example 1 except that the number and the shape of sealing members in the sealing zone between the preheating zone and the heating/drawing zone of the pressurized steam drawing device were changed to change ΔP/t as shown in Table 1. Table 1 shows the results of evaluating the quality and process passability for the obtained acrylonitrile fiber bundle, and the results of measuring the temperature in the pressurized steam drawing device.

[Comparative Example 3]

An acrylonitrile fiber bundle was obtained in the same manner as in Example 1 except that a dimethyl sulfoxide solution of an acrylonitrile copolymer containing 98 mol% acrylonitrile, 1 mol% itaconic acid, and 1 mol% methyl acrylate was used for spinning to change the minimum load temperature. Table 1 shows the results of evaluating the quality and process passability for the obtained acrylonitrile fiber bundle, and the results of measuring the temperature in the pressurized steam drawing device.

[Comparative Example 4]

An acrylonitrile fiber bundle was obtained in the same manner as in Example 1 except that the shape of the sealing member in the sealing zone 3A outside the preheating zone was changed to change the temperature in the preheating zone as shown in Table 1. Table 1 shows the results of evaluating the quality and process passability for the obtained acrylonitrile fiber bundle, and the results of measuring the temperature in the pressurized steam drawing device.

[Table 1]

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| $\triangle P/t$ | MPa/sec | 2.0 | 4.0 | 2.0 | 1.3 | 8.6 | 2.0 | 2.0 | 14.3 | 0.7 | 2.0 | 2.0 |
| Load minimum temperature (T1) | °C | 140 | 140 | 140 | 140 | 140 | 135 | 140 | 140 | 140 | 130 | 140 |
| Temperature in preheating region (T2) | °C | 134 | 134 | 134 | 134 | 134 | 134 | 122 | 134 | 134 | 134 | 118 |
| Number of labyrinths | pieces | 30 | 15 | 30 | 45 | 7 | 30 | 37 | 4 | 90 | 30 | 30 |
| Roundness | - | 0.93 | 0.93 | 0.75 | 0.93 | 0.93 | 0.93 | 0.93 | 0.93 | 0.93 | 0.93 | 0.93 |
| Quality of acrylonitrile fiber bundle when manufactured | - | 2 | 2 | 2 | 2 | 2 | 2 | 2 | 5 | 5 | 4 | 4 |
| Number of yarn breakages during manufacture of acrylonitrile fiber bundle | - | 1 | 1 | 2 | 2 | 2 | 2 | 2 | 4 | 5 | 4 | 5 |

DESCRIPTION OF REFERENCE SIGNS

A: Pressurized steam drawing device
B: Traveling direction of fiber bundle
1: Preheating zone
2: Heating/drawing zone
3A: Sealing zone outside preheating zone
3a1: Sealing member
3a2: Sealing member
3B: Sealing zone between preheating zone and heating/drawing zone
3b1: Sealing member
3b2: Sealing member
3C: Sealing zone outside heating/drawing zone
3c1: Sealing member
3c2: Sealing member
4: Steam pressure control device
5: Thermometer (TI)
6: Manometer (PI)
7: Fiber bundle
8: Feed roll

**Claims**

1. A method for manufacturing an acrylonitrile fiber bundle, the method comprising the step of:

    drawing a fiber bundle with pressurized steam under a pressurized steam atmosphere using a pressurized steam drawing device,

    the fiber bundle including a yarn spun from a spinning solution containing an acrylonitrile copolymer,
    the pressurized steam drawing device having at least two zones of a preheating zone provided on a fiber bundle introduction side and a heating/drawing zone provided on a fiber bundle extraction side, and a sealing zone having a sealing member and separating the two zones,

    a pressure P1 (MPa), a pressure P2 (MPa),a difference between P2 and P1, that is, $\Delta P = P2 - P1$, and a residence time t (sec) satisfying a relationship $1.0 \leq \Delta P/t \leq 10$,
    wherein the pressure P1 is a pressure in the preheating zone, the pressure P2 is a pressure in the heating/drawing zone, and the residence time t is a residence time of the fiber bundle in the sealing zone,
    a minimum load temperature T1 (°C) of the fiber bundle before being introduced into the pressurized steam drawing device and a temperature T2 (°C) in the preheating zone satisfying a relationship $T1 - 20 \leq T2 < T1$.

2. The method according to claim 1, wherein a single yarn of the fiber bundle before being introduced into the pressurized steam drawing device has a roundness of 0.9 or more.

3. A method for manufacturing a carbon fiber bundle, the method comprising the steps of:

    manufacturing an acrylonitrile fiber bundle by the method according to claim 1 or 2,
    oxidizing the acrylonitrile fiber bundle in an oxidative atmosphere at 200 to 300°C, and then
    heating the acrylonitrile fiber bundle in an inert atmosphere at 1000°C or higher.

FIG 1

<table>
<tr><td colspan="2" align="center"><b>INTERNATIONAL SEARCH REPORT</b></td><td>International application No.<br><br>PCT/JP2019/009888</td></tr>
</table>

**A. CLASSIFICATION OF SUBJECT MATTER**

Int. Cl. D01F6/18(2006.01)i, D01D5/06(2006.01)i, D01F9/22(2006.01)i

According to International Patent Classification (IPC) or to both national classification and IPC

**B. FIELDS SEARCHED**

Minimum documentation searched (classification system followed by classification symbols)

Int. Cl. D01F1/00-6/96, D01F9/00-9/04, D01F9/08-9/32, D01D1/00-13/02

Documentation searched other than minimum documentation to the extent that such documents are included in the fields searched

Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-174073 A (TORAY INDUSTRIES, INC.) 06 August 2009, claims, examples (Family: none) | 1-3 |
| A | JP 2008-214795 A (TORAY INDUSTRIES, INC.) 18 September 2008, claims, examples (Family: none) | 1-3 |
| A | JP 5-263313 A (TORAY INDUSTRIES, INC.) 12 October 1993, claims, examples (Family: none) | 1-3 |
| A | WO 2014/203880 A1 (MITSUBISHI RAYON CO., LTD.) 24 December 2014, claims, examples & US 2016/0151959 A1, claims, examples & EP 3012360 A1 & CN 105358746 A & KR 10-2016-0010611 A | 1-3 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08.04.2019 | Date of mailing of the international search report<br>23.04.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2019/009888

C (Continuation).    DOCUMENTS CONSIDERED TO BE RELEVANT

| Category* | Citation of document, with indication, where appropriate, of the relevant passages | Relevant to claim No. |
|---|---|---|
| P, A | WO 2018/168685 A1 (TORAY INDUSTRIES, INC.) 20 September 2018, claims, examples & TW 201839192 A | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013159874 A
- JP H05263313 B
- JP 2008214795 A
- JP 2015030923 A